# EUROPEAN PATENT SPECIFICATION

(11) **EP 2 182 775 B1**
(45) Date of publication and mention of the grant of the patent: **15.08.2012**
(21) Application number: 08018852.7
(22) Date of filing: 29.10.2008
(51) Int. Cl.: H05B 33/08

(54) **Detection of earth faults and interwire short circuits for DC lamp circuits**
Erkennung von Erdfehlern und Kabel-Kurzschlüssen für DC-Lampenschaltungen
Détection de défauts de terre et de courts-circuits entre fils pour circuits de lampe CC

(43) Date of publication of application: 05.05.2010
(73) Proprietor: Thales Deutschland GmbH, 70435 Stuttgart (DE)
(72) Inventor: Baumgartner, Dieter, 1120 Wien (AT); Lampel, Martin, 1200 Wien (AT)
(74) Representative: Kohler Schmid Möbus

(56) References cited:
- EP-A- 1 874 098
- DE-A1- 3 420 087
- US-A1- 2004 155 604

## Description

### Background of the invention

The invention relates to driving circuit for driving at least one lamp.

In electronic interlockings signal lamps are normally controlled via a two wire circuit. For safety reasons these wires have to be supervised whether there is a short circuit to earth or between two wires to avoid the unintended lightening of a lamp. In case of a lamp circuit with a lamp transformer controlled via an earth cable from the indoor equipment this supervision can be done by a little DC current and measurement of this current.

Compared with a transformer, a LED signal only admits DC currents, so the supervision has to be done with the same voltage source as used for lightening the signal.

EP 1 874 098 A1 discloses an LED signal apparatus which comprises input signal power supply terminals for the apparatus; a series connection of switch means and a ballast load connected across the supply terminals; an LED signal lamp connected to the terminals to be supplied with current therefrom; and switch operating means, in the supply path of the LED lamp, for controlling the state of the switch means in the series connection, whereby total failure or substantially total failure of the current to the LED signal lamp results in the switch operating means causing the switching means to open in order to disconnect the ballast load from power from the supply terminals.

US 2004/0155604 A1 discloses a lighting circuit including a circuit for preventing erroneous illumination of LEDs wherein the lighting circuit, serving as a drive circuits for the LEDs, includes a transistor and a differential amplifier placed at a preceding stage of the transistor. A positive input side of the differential amplifier is connected to a battery through a switch and to a reference resistor. A voltage of the battery is divided by two resistors and supplied to a negative input side of the differential amplifier. A resistance value is set to be smaller than a leakage resistance value of the switch. Thus, the differential amplifier is not turned on when the switch is opened even though there is a leakage at the switch. Therefore, the transistor is not turned on, and the LEDs are not illuminated.

### Object of the invention

It is the object of the invention to provide a driving circuit for driving at least one lamp (e.g. LED), wherein the driving circuit is operated by a DC voltage circuit and can be easily supervised for interwire breaches or earth faults.

### Short description of the invention

This object is achieved, in accordance with the invention, by a driving circuit for driving at least one lamp, comprising two DC voltage sources connected in series, thereby providing a positive pole, a negative pole and a center point between the two DC voltage sources, wherein the driving circuit comprises for each lamp:
- a first wire connecting the lamp to the positive pole,
- a second wire connecting the lamp to the negative pole,
- a central wire connected to the center point and branching at a branching point to be connected to both the first wire at a first connection point and to the second wire at a second connection point,
- a first switching unit which in a first switching state connects the positive pole to the first connection point and interrupts the connection between the central wire and the first connection point, and in a second switching state vice and
- a second switching unit which in a first switching state connects the negative pole to the second connection point and interrupts the connection between the central wire and the second connection point, and in a second switching state vice versa.

According to the invention, the power supply for the lamps (e.g. LEDs) is provided by two DC voltage sources connected in series. The first switching unit is controlled by a signal of a first channel and the second switching unit is controlled by a signal of a second channel. Each lamp circuit is measured at three points: at the first wire, the second wire and the central wire. Alternately the first and the second wire of each lamp circuit is switched on separately by the switching units during a routine test.

The center point of the voltage sources provides the possibility to test for wire breaches. Thanks to the split power supply it is possible to detect wire breaches because a current starts flowing. To determine which cores are effected a simple check is done at every switching procedure.
Under normal operation conditions the amount of current that flows into the circuit flows out again. In case of an earth leakage this balance is uneven and therefore the electric circuit is closed via earth. This current is an evidence for an earth leakage. The affected core is determined via a current measurement.
The check for the interwire breach is also based on current measurement. If a lamp is going to be switched, all currents (all channels) are measured. Afterwards this channel is switched on and the currents are measured again. Normally there shouldn't be a noticeable change at the current level. If one ore more currents have changed a wire breach has been detected. The affected cores strike out because a significant current is detected where the system would expect none.

In summary, the driving circuit according to the invention provides the following key features:
- 2 channel (safety):
   The only way to switch on the lamp is that both channels have the same value.
- Interwire breach detection:
   It is possible to determine the causing cores of an interwire breach (in a multi core wire). This detection is done by a sophisticated algorithm that switches the right contact (at the right time) and reads the flowing current in all cores. This outcome is compared to a predefined check list. In case of a mismatch a wire breach has been identified.
- Earth shortage detection:
   A earth shortage is recognised immediately because the sum of the flowing currents isn't zero any longer and another current starts flowing back into the voltage source via the center point. This current is an indication for an earth shortage. The affected cores are determined by the current measurement in the center point branches and the knowledge of the switched-on A or B branches.

An earth fault or an interwire short circuit is detected by a supervision control unit based on the switching states of the switching units and the current measurement, following by an appropriate action.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing, in which:
- Fig. 1: shows schematically a block diagram of a driving circuit according to the invention;
- Figs. 2-21: the current flow within the driving circuit shown in Fig. 1 in the case of different possible short circuits.

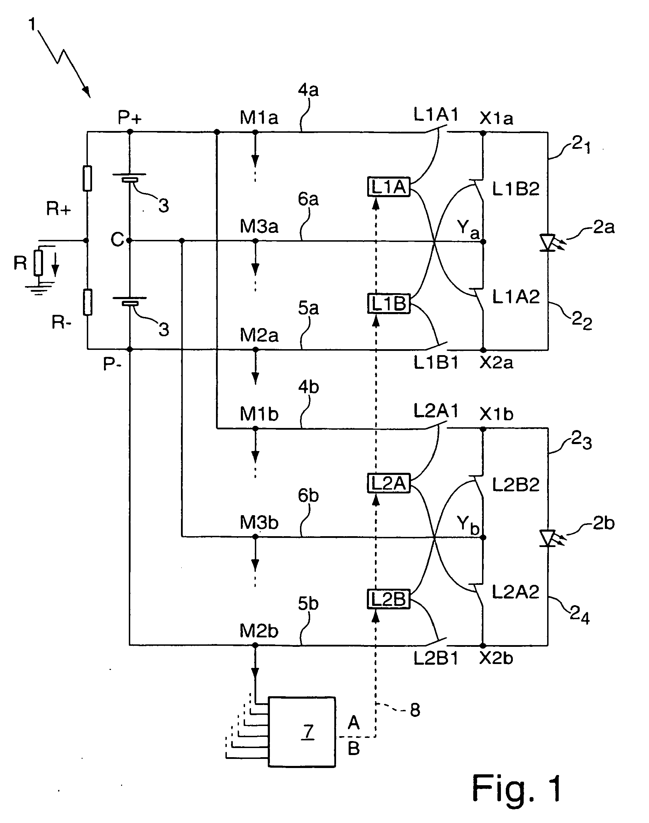

**Fig. 1** shows a driving circuit **1** for driving two lamp (e.g. LEDs) **2a, 2b**, the cores of which are designated by **2₁**, **2₂,** and **2₃, 2₄.** The driving circuit 1 comprises two DC voltage sources **3** connected in series, thereby providing a positive pole **P+,** a negative pole **P-** and a center point **C** between the two DC voltage sources 3. For each lamp 2a, 2b, the driving circuit 1 comprises:
- a first wire **4a, 4b** connecting the lamp 2a, 2b to the positive pole P+,
- a second wire **5a, 5b** connecting the lamp 2a, 2b to the negative pole P-,
- a central wire **6a, 6b** connected to the center point C and branching at a branching point **Ya, Yb** to be connected both to the first wire 4a, 4b at a first connection point **X1a, X1b** and to the second wire 5a, 5b at a second connection point **X2a, X2b,**
- a first switching unit **L1A, L2A** which in a first switching state connects the positive pole P+ to the first connection point X1a, X1b and interrupts the connection between the central wire 6a; 6b and the first connection point X1a, X1b, and in a second switching state vice versa, and
- a second switching unit **L1B; L2B** which in a first switching state connects the negative pole P- to the second connection point X2a, X2b and interrupts the connection between the central wire 6a, 6b and the second connection point X2a, X2b, and in a second switching state vice versa.

The switching unit L1A comprises a first switch **L1A1** provided between the positive pole P+ and the first connection point X1 a and a second switch **L1A2** provided between the branching point Ya and the second connection point X2a, the two switches L1 A1, L1 A2 being complementarily switched on and off.
The switching unit L1 B comprises a first switch **L1B1** provided between the negative pole P- and the second connection point X2a and a second switch **L1B2** provided between the branching point Ya and the first connection point X1 a, the two switches L1B1, L1B2 being complementarily switched on and off.
The switching unit L2A comprises a first switch **L2A1** provided between the positive pole P+ and the first connection point X1 b and a second switch **L2A2** provided between the branching point Yb and the second connection point X2b, the two switches L2A1, L2A2 being complementarily switched on and off.
The switching unit L2B comprises a first switch **L2B1** provided between the negative pole P- and the second connection point X2b and a second switch **L2B2** provided between the branching point Yb and the first connection point X1 b, the two switches L2B1, L2B2 being complementarily switched on and off.

Each of the poles P+, P- is connected by a resistor **R+, R-** to a center point resistor **R** which is connected to earth.

The switching units L1 A, L2A, L1 B, L2B are controlled by an supervision control unit **7** via control lines **8.** More precisely, the first switching units L1 A, L2A are controlled by a signal of a channel **A** and the second switching units L1 B, L2B are controlled by a signal of a channel **B** in order to obtain a two channel control. The supervision control unit 7 is connected to a first current measuring points **M1a, M1b** provided in the first wire 4a, 4b between the positive pole P+ and the first connection point X1 a, X1 b, a second current measuring point **M2a, M2b** provided in the second wire 5a, 5b between the negative pole P- and the second connection point X2a, X2b, and a third current measuring point **M3a, M3b** provided in the central wire 6a,6b between the center point C and the branching point Ya, Yb. As described in detail below, the supervision control unit 7 detects short circuits of the driving circuit 1 based on the switching states of the switching units L1 A, L2A, L1B, L2B and the current measurements in the current measuring points.

To switch on the lamp 2a, the switches L1A1, L1B1 are closed and, accordingly, the switches L1 A2, L1B2 are open. Under normal operation conditions the amount of current that flows into the circuit at M1a flows out again at M2a. To switch on the lamp 2b, the switches L2A1, L2B1 are closed and, accordingly, the switches L2A2, L2B2 are open. Under normal operation conditions the amount of current that flows into the circuit at M1b flows out again at M2b. In case of an earth leakage this balance is uneven and therefore the an earth leakage can be detected. Thanks to the split power supply it is possible to detect wire breaches because a current starts flowing.

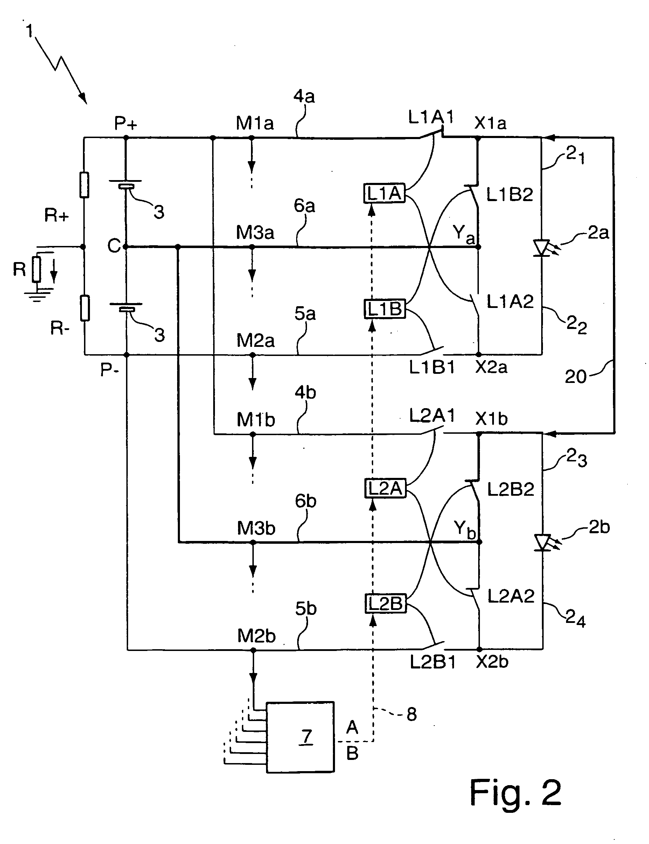

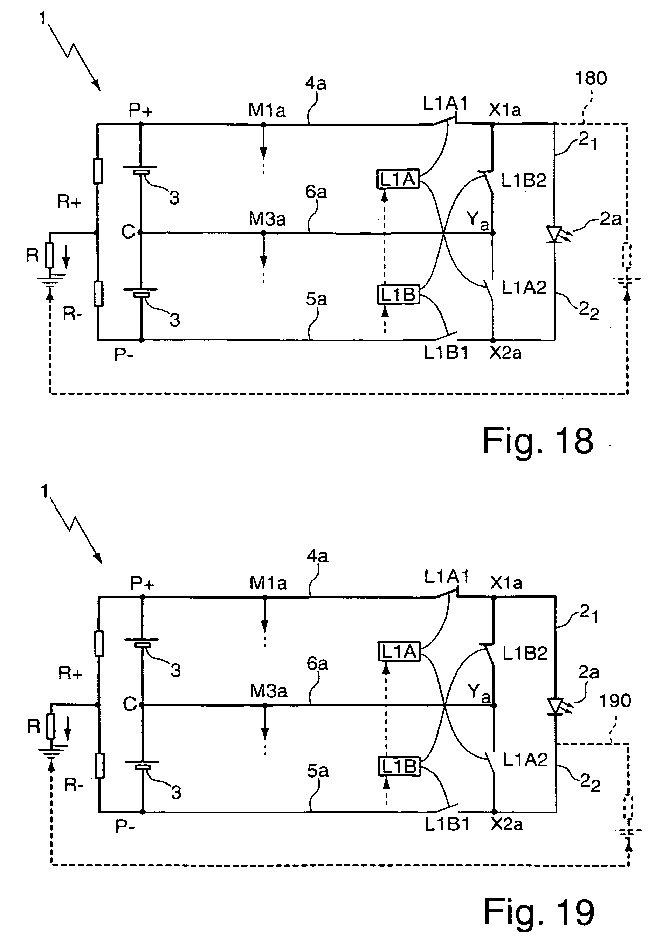

Figs. 2 to 21 show the current flow within the driving circuit 1 in the case of possible different short circuits, wherein the closed circuit is marked with bolt lines. Figs. 2 to 17 show interwire breaches and Figs. 18 to 21 show earth faults.

**Fig. 2** shows an interwire breach **20** between core 2₁ of lamp 2a and core 2₃ of lamp 2b with the switch L1A1 being closed and the switches L1B1, L2A1, L2B1 being open. As a result, current at M1a is not equal with current at M3a, and the lamps 2a, 2b are not activated.

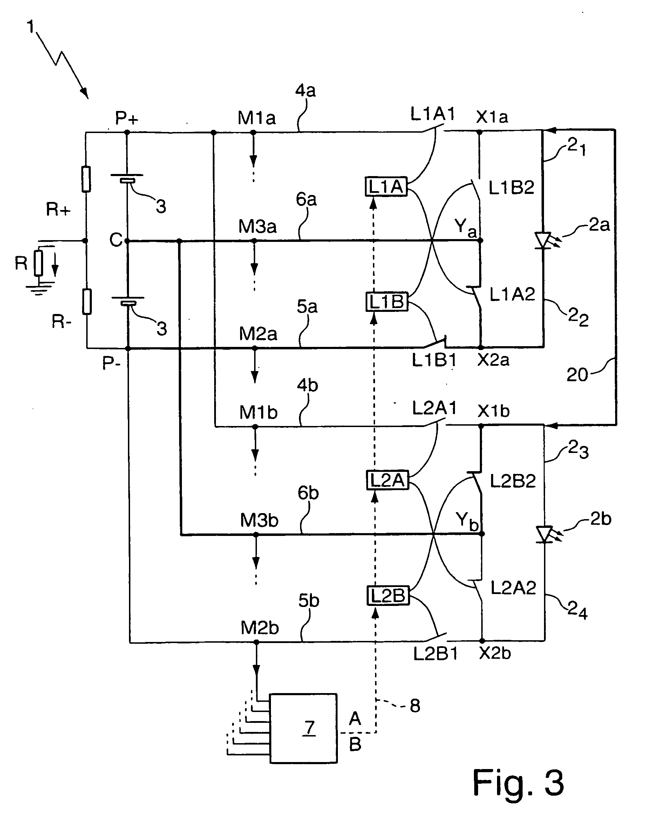

**Fig. 3** shows an interwire breach 20 between core 2₁ of lamp 2a and core 2₃ of lamp 2b with the switch L1B1 being closed and the switches L1 A1, L2A1, L2B1 being open. As a result, current at M2a is not equal with current at M3a, and only the lamp 2a is activated.

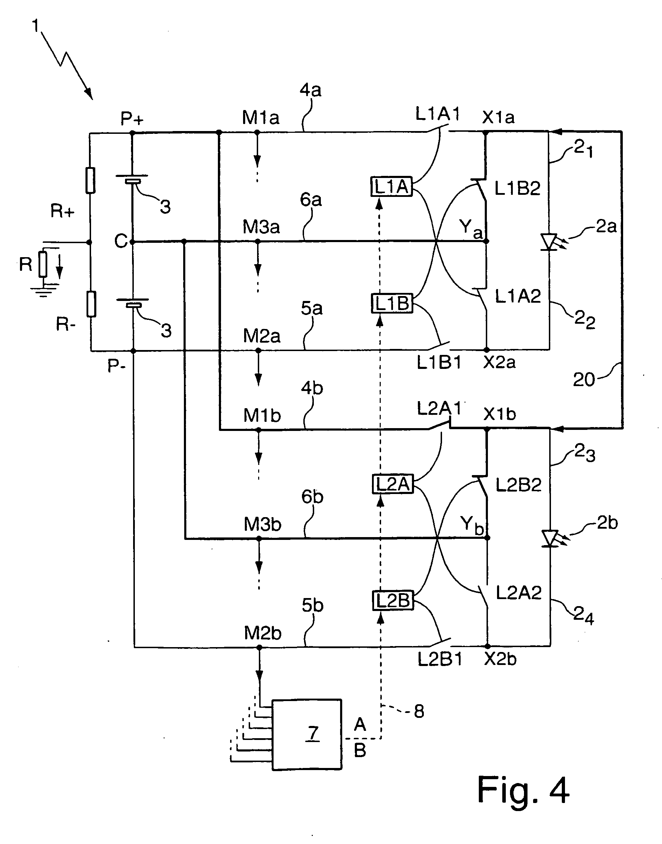

**Fig. 4** shows an interwire breach 20 between core 2₁ of lamp 2a and core 2₃ of lamp 2b with the switch L2A1 being closed and the switches L1 A1, L1B1, L2B1 being open. As a result, current at M1b is not equal with current at M3b, and the lamps 2a, 2b are not activated.

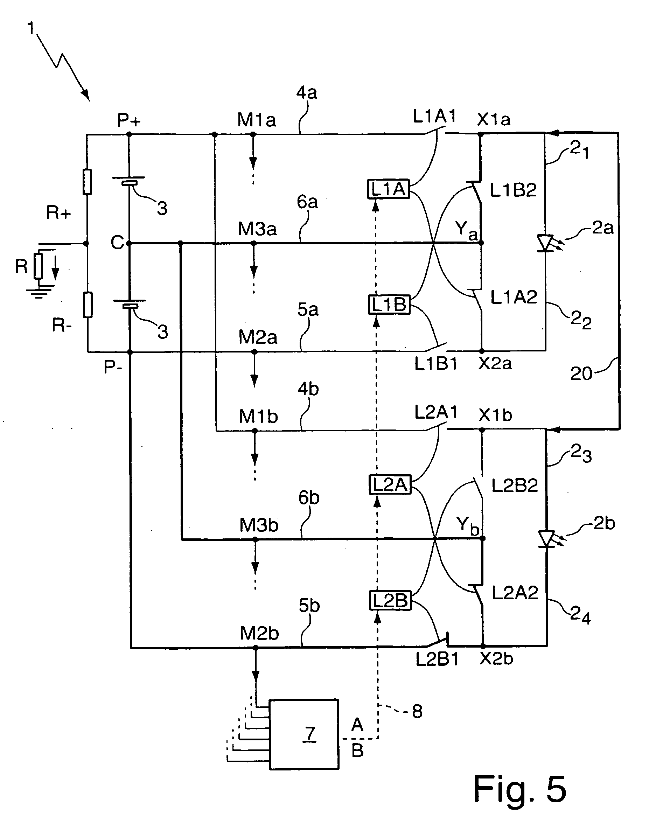

**Fig. 5** shows an interwire breach 20 between core 2₁ of lamp 2a and core 2₃ of lamp 2b with the switch L2B1 being closed and the switches L1 A1, L1B1, L2A1 being open. As a result, current at M2b is not equal with current at M3b, and only the lamp 2b is activated.

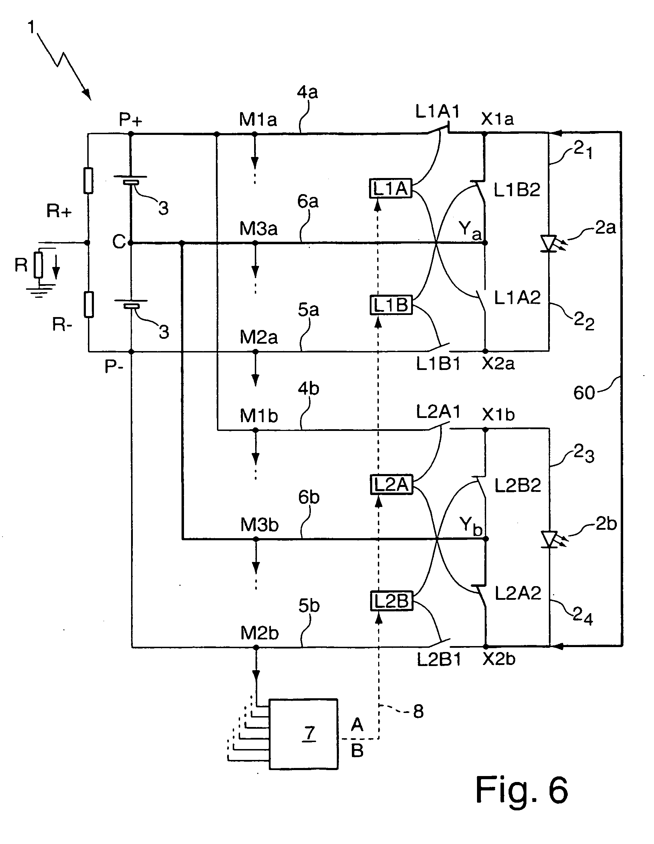

**Fig. 6** shows an interwire breach **60** between core 2₁ of lamp 2a and core 2₄ of lamp 2b with the switch L1A1 being closed and the switches L1B1, L2A1, L2B1 being open. As a result, current at M1 a is not equal with current at M3a, and the lamps 2a, 2b are not activated.

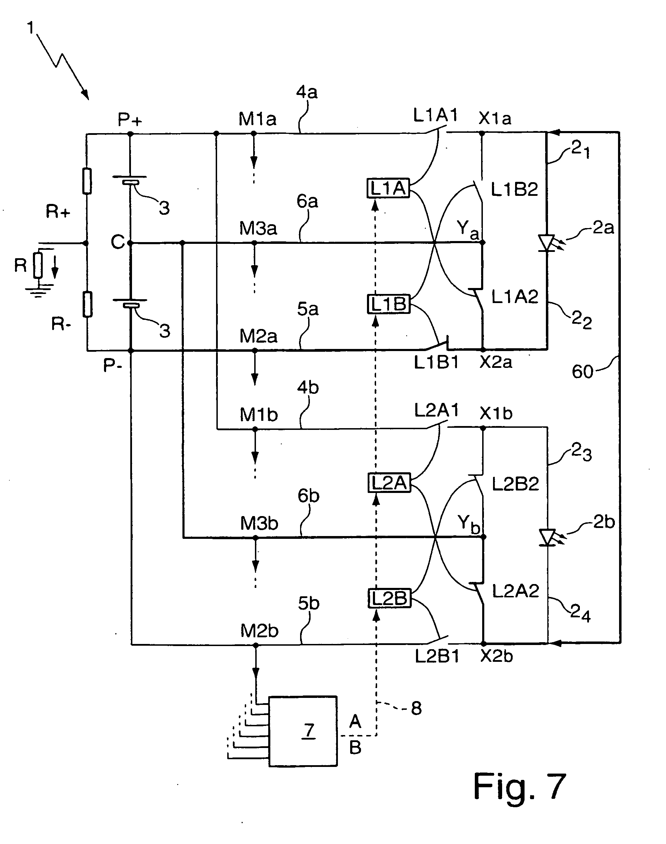

**Fig. 7** shows an interwire breach 60 between core 2₁ of lamp 2a and core 2₄ of lamp 2b with the switch L1B1 being closed and the switches L1 A1, L2A1, L2B1 being open. As a result, current at M2a is not equal with current at M3a, and only the lamp 2a is activated.

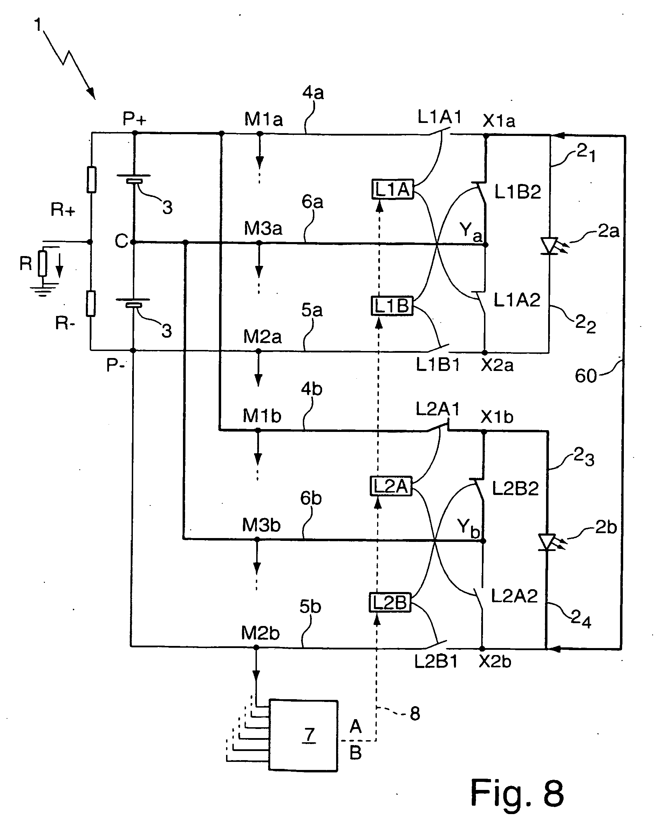

**Fig. 8** shows an interwire breach 60 between core 2₁ of lamp 2a and core 2₄ of lamp 2b with the switch L2A1 being closed and the switches L1 A1, L1B1, L2B1 being open. As a result, current at M1b is not equal with current at M3b, and only the lamp 2b is activated.

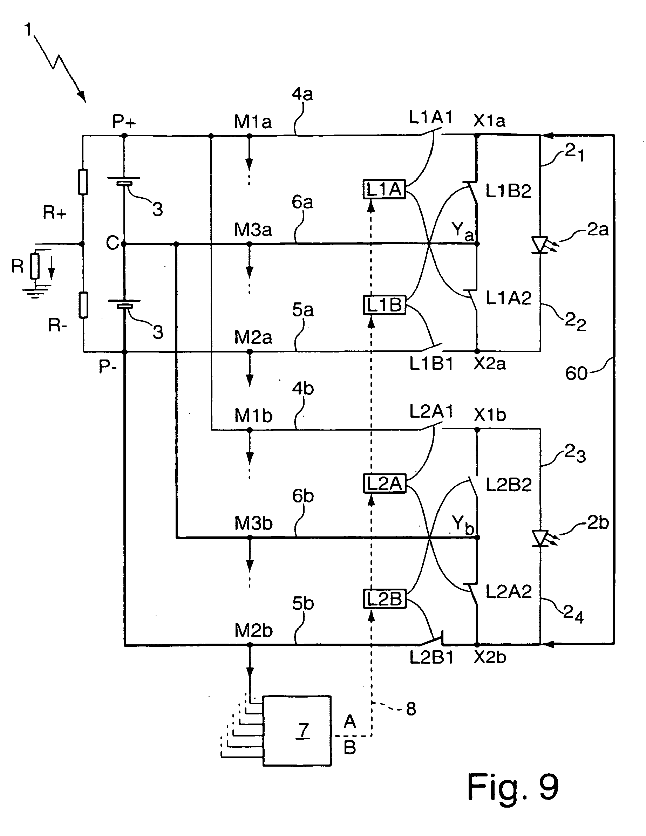

**Fig. 9** shows an interwire breach 60 between core 2₁ of lamp 2a and core 2₄ of lamp 2b with the switch L2B1 being closed and the switches L1 A1, L1B1, L2A1 being open. As a result, current at M2b is not equal with current at M3b, and the lamps 2a, 2b are not activated.

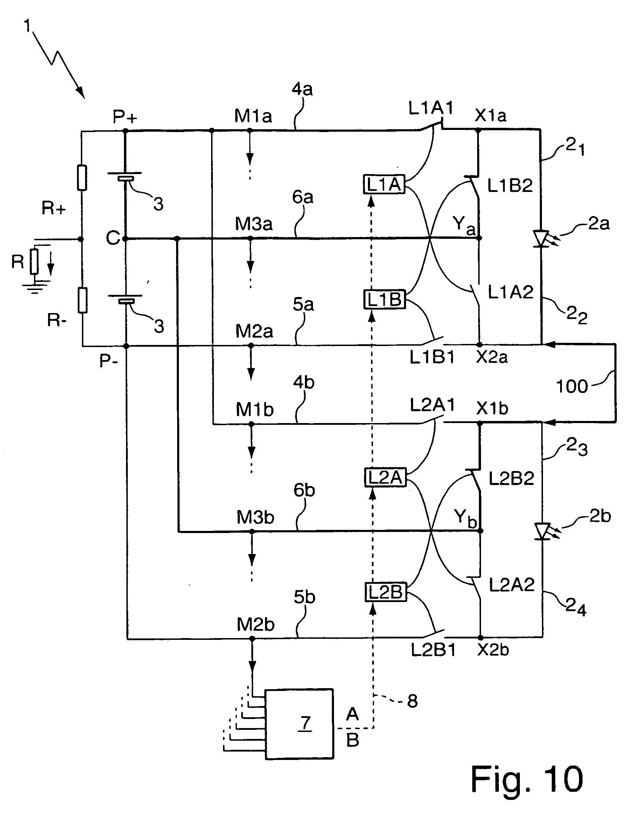

**Fig. 10** shows an interwire breach **100** between core 2₂ of lamp 2a and core 2₃ of lamp 2b with the switch L1A1 being closed and the switches L1B1, L2A1, L2B1 being open. As a result, current at M1 a is not equal with current at M3a, and only the lamp 2a is activated.

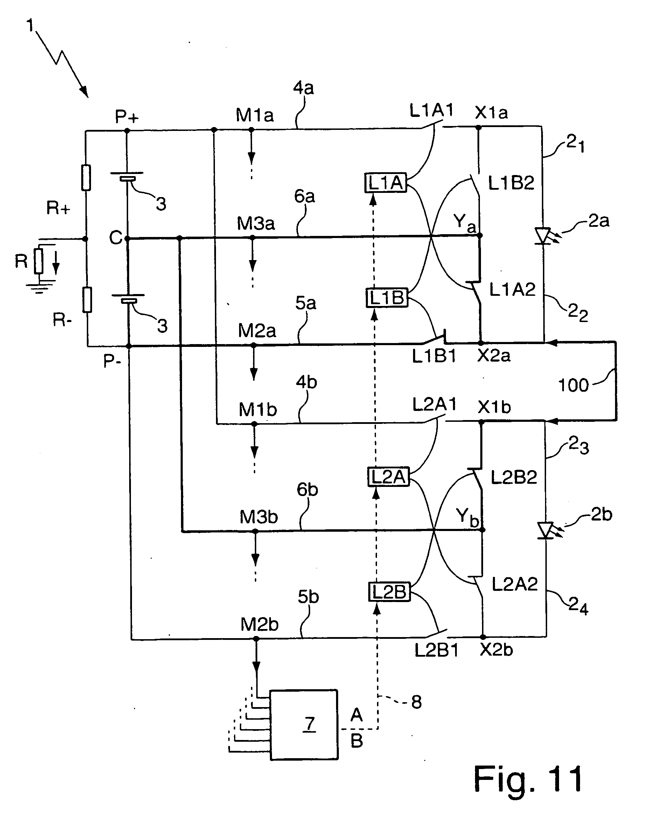

**Fig. 11** shows an interwire breach 100 between core 2₂ of lamp 2a and core 2₃ of lamp 2b with the switch L1B1 being closed and the switches L1A1, L2A1, L2B1 being open. As a result, current at M2a is not equal with current at M3a, and the lamps 2a, 2b are not activated.

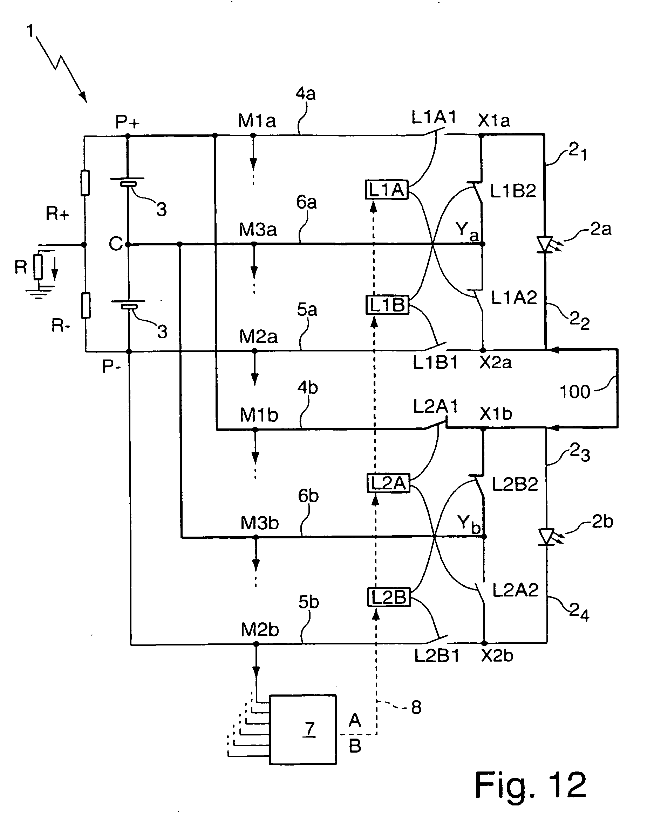

**Fig. 12** shows an interwire breach 100 between core 2₂ of lamp 2a and core 2₃ of lamp 2b with the switch L2A1 being closed and the switches L1A1, L1B1, L2B1 being open. As a result, current at M1b is not equal with current at M3b, and only the lamp 2a is activated.

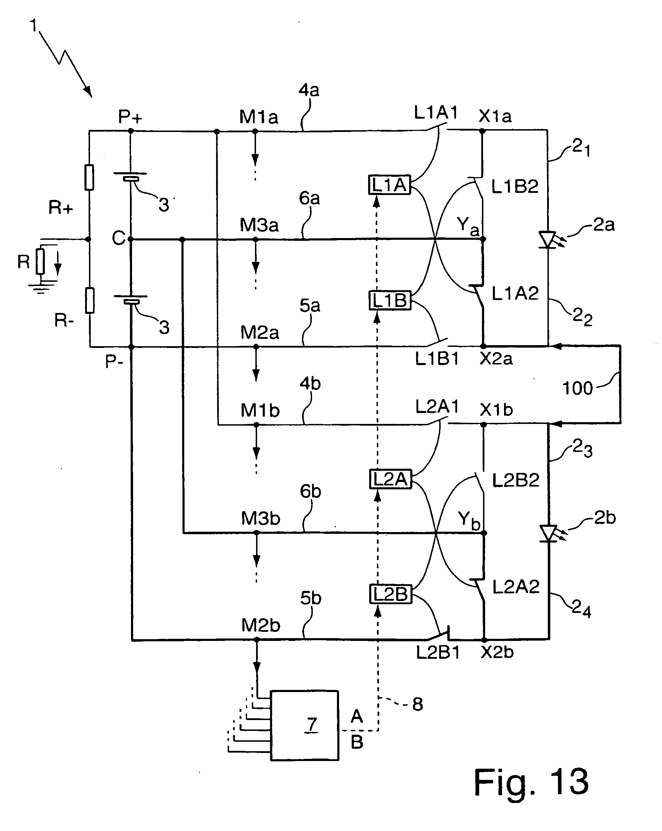

**Fig. 13** shows an interwire breach 100 between core 2₂ of lamp 2a and core 2₃ of lamp 2b with the switch L2B1 being closed and the switches L1A1, L1B1, L2A1 being open. As a result, current at M2b is not equal with current at M3b, and only the lamp 2b is activated.

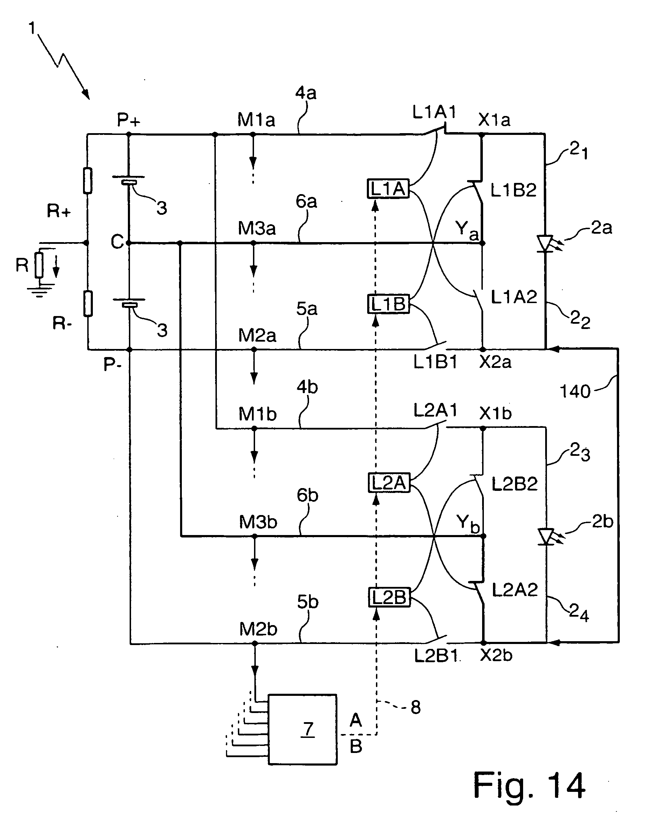

**Fig. 14** shows an interwire breach **140** between core 2₂ of lamp 2a and core 2₄ of lamp 2b with the switch L1A1 being closed and the switches L1B1, L2A1, L2B1 being open. As a result, current at M1a is not equal with current at M3a, and only the lamp 2a is activated.

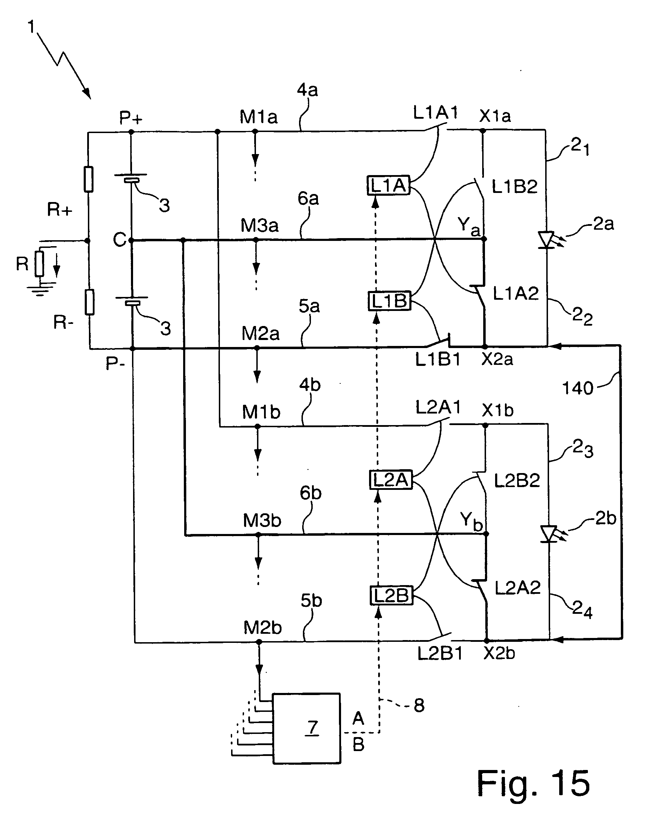

**Fig. 15** shows an interwire breach 140 between core 2₂ of lamp 2a and core 2₄ of lamp 2b with the switch L1B1 being closed and the switches L1A1, L2A1, L2B1 being open. As a result, current at M2a is not equal with current at M3a, and the lamps 2a, 2b are not activated.

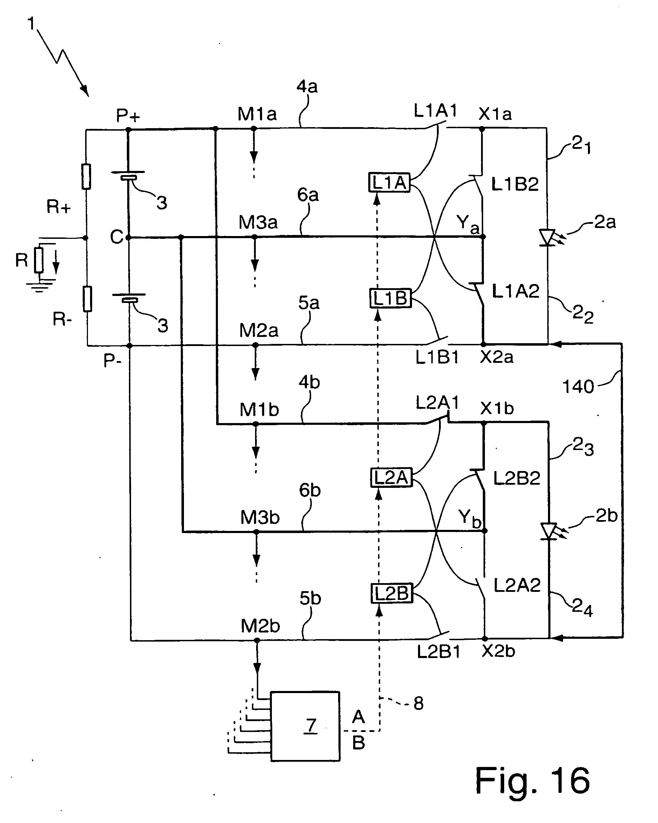

**Fig. 16** shows an interwire breach 140 between core 2₂ of lamp 2a and core 2₄ of lamp 2b with the switch L2A1 being closed and the switches L1A1, L1B1, L2B1 being open. As a result, current at M1b is not equal with current at M3b, and only the lamp 2b is activated.

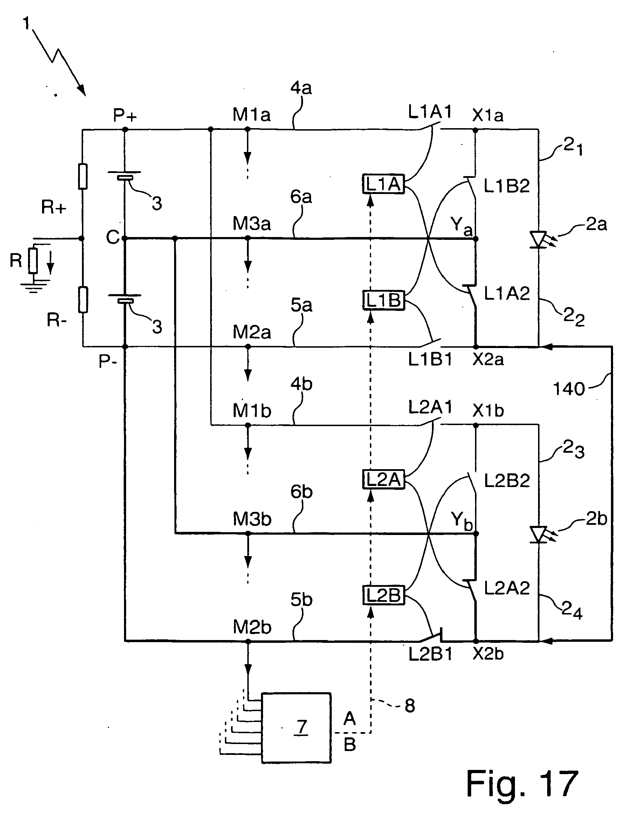

**Fig. 17** shows an interwire breach 140 between core 2₂ of lamp 2a and core 2₄ of lamp 2b with the switch L2B1 being closed and the switches L1A1, L1 B1, L2A1 being open. As a result, current at M2b is not equal with current at M3b, and the lamps 2a, 2b are not activated.

**Fig. 18** shows an earth shortage **180** of core 2₁ of lamp 2a with the switch L1A1 being closed and the switch L1 B1 being open. As a result, current at M1 a is not equal with current at M3a, and a voltage is detected at the center point resistor R.

**Fig. 19** shows an earth shortage **190** of core 2₂ of lamp 2a with the switch L1A1 being closed and the switch L1 B1 being open. As a result, current at M1 a is not equal with current at M3a, and a voltage is detected at the center point resistor R.

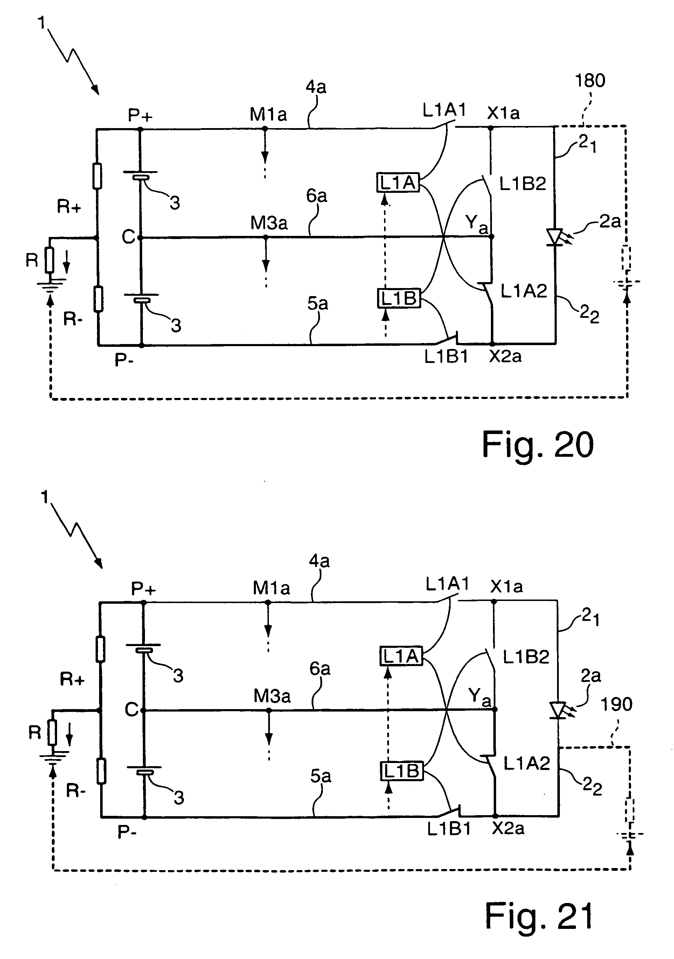

**Fig. 20** shows an earth shortage 180 of core 2₁ of lamp 2a with the switch L1 B1 being closed and the switch L1A1 being open. As a result, current at M2a is not equal with current at M3a, and a voltage is detected at the center point resistor R.

**Fig. 21** shows an earth shortage 190 of core 2₂ of lamp 2a with the switch L1B1 being closed and the switch L1A1 being open. As a result, current at M2a is not equal with current at M3a, and a voltage is detected at the center point resistor R.

The center point C provides the possibility to test for wire breaches. Thanks to the split power supply it is possible to detect wire breaches because a current starts flowing. To determine which cores are effected a simple check is done at every switching procedure. Under normal operation conditions the amount of current that flows into the circuit flows out again. The only way to switch on the lamp (led) is that both channel (A and B) have the same value.

In case of an earth leakage (Figs. 18 to 21) this balance is uneven and therefore the electric circuit is closed via the center point resistor R. This current is an evidence for a earth leakage. The affected core is determined via a current measurement. A earth shortage is recognised immediately because the sum of the flowing currents isn't zero any longer and another current starts flowing back into the voltage source via the center point. This current is an indication for an earth shortage. The affected cores are determined by the current measurement in the center point branches and the knowledge of the on switched A or B branches.

The check for the inter wire breach (Figs. 2 to 17) is also based on current measurement. If a lamp is going to be switched, all currents (all channels) are measured. Afterwards this channel is switched on and the currents are measured again. Normally there shouldn't be a noticeable change at the current level. If one or more currents have changed a wire breach has been detected. The affected cores strike out because a significant current is detected where the system would expect none. It is possible to determine the causing cores of an interwire breach (in a multi core wire) by using this circuit. This detection is done by a sophisticated algorithm that switches the right contact (at the right time) and reads the flowing current in all cores. This outcome is compared to a predefined check list. In case of a mismatch a wire breach has been identified.

## Claims

1. Driving circuit (1) for driving at least one lamp (2a; 2b), comprising two DC voltage sources (3) connected in series, thereby providing a positive pole (P+), a negative pole (P-) and a center point (C) between the two DC voltage sources (3), wherein the driving circuit (1) comprises for each lamp (2a; 2b):
- a first wire (4a; 4b) connecting the lamp (2a; 2b) to the positive pole (P+),
- a second wire (5a; 5b) connecting the lamp (2a; 2b) to the negative pole (P-),
- a central wire (6a; 6b) connected to the center point (C) and branching at a branching point (Ya; Yb) to be connected to both the first wire (4a; 4b) at a first connection point (X1a; X1b) and to the second wire (5a; 5b) at a second connection point (X2a; X2b),
- a first switching unit (L1A; L2A) which in a first switching state connects the positive pole (P+) to the first connection point (X1a; X1b) and interrupts the connection between the central wire (6a; 6b) and the first connection point (X1a; X1b), and in a second switching state vice versa,
- a second switching unit (L1B; L2B) which in a first switching state connects the negative pole (P-) to the second connection point (X2a; X2b) and interrupts the connection between the central wire (6a; 6b) and the second connection point (X2a; X2b), and in a second switching state vice versa, and
- a supervision control unit (7) for detecting an earth fault or an interwire short circuit, based on the switching states of the switching units j (L1A, L2A; L1 B, L2B) and on current measurements at the first, second and central wires (4a, 5a, 6a; 4b, 5b, 6b).

2. Driving circuit according to claim 1, **characterized in that** the switching units (L1A, L2A; L1B, L2B) comprise each two switches (L1A1, L1A2; L2A1, L2A2; L1B1, L1B2: L2B1, L2B2) which are complementarily switched on and off.

3. Driving circuit according to claim 1 or 2, **characterized in that** the switching units (L1A, L2A; L1 B, L2B) are controlled by the supervision unit (7) which is connected to a first current measuring point (M1) provided in the first wire (4a; 4b) between the positive pole (P+) and the first connection point (X1a; X1b), a second current measuring point (M2) provided in the second wire (5a; 5b) between the negative pole (P-) and the second connection point (X2a; X2b), and a third current measuring point (M3) provided in the central wire (6a; 6b) between the center point (C) and the branching point (Ya; Yb), wherein the supervision unit (7) detects short circuits based on the switching states of the switching units (L1A. L2A; L1 B, L2B) and the current measurement.

4. Driving circuit according to any one of the preceding claims, **characterized in that** each of the poles (P+, P-) is connected by a resistor (R+, R-) to a center point resistor (R) which is connected to earth.

## Patentansprüche

1. Treiberschaltung (1) zum Ansteuern mindestens einer Lampe (2a; 2b) umfassend zwei Gleichspannungsquellen (3), die in Reihe geschaltet sind, wodurch ein Pluspol (P+), ein Minuspol (P-) und ein Mittelpunkt (C) zwischen den zwei Gleichspannungsquellen (3) bereitgestellt sind, wobei die Treiberschaltung (1) für jede Lampe (2a; 2b) umfasst:
- einen ersten Draht (4a; 4b), der die Lampe (2a; 2b) mit dem Pluspol (P+) verbindet,
- einen zweiten Draht (5a; 5b), der die Lampe (2a; 2b) mit dem Minuspol (P-) verbindet,
- einen mittleren Draht (6a; 6b), der mit dem Mittelpunkt (C) verbunden ist und sich an einem Verzweigungspunkt (Ya; Yb) verzweigt, um sowohl mit dem ersten Draht (4a; 4b) an einem ersten Verbindungspunkt (X1a; X1b) als auch mit dem zweiten Draht (5a; 5b) an einem zweiten Verbindungspunkt (X2a; X2b) verbunden zu sein,
- eine erste Schalteinheit (L1A; L2A), die in einem ersten Schaltzustand den Pluspol (P+) mit dem ersten Verbindungspunkt (X1a; X1b) verbindet und die Verbindung zwischen dem mittleren Draht (6a; 6b) und dem ersten Verbindungspunkt (X1a; X1 b) unterbricht, und in einem zweiten Schaltzustand umgekehrt,
- eine zweite Schalteinheit (L1B; L2B), die in einem ersten Schaltzustand den Minuspol (P-) mit dem zweiten Verbindungspunkt (X2a; X2b) verbindet und die Verbindung zwischen dem mittleren Draht (6a; 6b) und dem zweiten Verbindungspunkt (X2a; X2b) unterbricht, und in einem zweiten Schaltzustand umgekehrt, und
- eine Überwachungssteuereinheit (7) zum Detektieren eines Erdfehlers oder eines Zwischendrahtkurzschlusses auf der Basis der Schaltzustände der Schalteinheiten (L1A, L2A; L1 B, L2B) und der Strommessungen an dem ersten, zweiten und mittleren Draht (4a, 5a, 6a; 4b, 5b, 6b).

2. Treiberschaltung nach Anspruch 1, **dadurch gekennzeichnet, dass** die Schalteinheiten (L1A, L2A; L1B, L2B) jeweils zwei Schalter (L1A1, L1A2; L2A1, L2A2; L1B1, L1B2; L2B1, L2B2) aufweisen, die komplementär an- und ausgeschaltet werden.

3. Treiberschaltung nach Anspruch 1 oder 2, **dadurch gekennzeichnet, dass** die Schalteinheiten (L1A, L2A; L1 B, L2B) von der Überwachungseinheit (7) gesteuert sind, die mit einem ersten Strommesspunkt (M1), welcher in dem ersten Draht (4a; 4b) zwischen dem Pluspol (P+) und dem ersten Verbindungspunkt (X1a; X1 b) vorgesehen ist, einem zweiten Strommesspunkt (M2), welcher in dem zweiten Draht (5a; 5b) zwischen dem Minuspol (P-) und dem zweiten Verbindungspunkt (X2a; X2b) vorgesehen ist, und einem dritten Strommesspunkt (M3) verbunden ist, welcher in dem mittleren Draht (6a; 6b) zwischen dem Mittelpunkt (C) und dem Verzweigungspunkt (Ya; Yb) vorgesehen ist, wobei die Überwachungseinheit (7) Kurzschlüsse auf der Basis der Schaltzustände der Schalteinheiten (L1A, L2A; L1B, L2B) und der Strommessung detektiert.

4. Treiberschaltung nach einem der vorhergehenden Ansprüche, **dadurch gekennzeichnet, dass** jeder der Pole (P+, P-) durch einen Widerstand (R+, R-) mit einem Mittelpunktwiderstand (R) verbunden ist, der mit Erde verbunden ist.

## Revendications

1. Circuit d'excitation (1) pour exciter au moins une lampe (2a ; 2b), comprenant deux sources de tension C.C. (3) connectées en série, de manière à produire un pôle positif (P+), un pôle négatif (P-) et un point central (C) entre les deux sources de tension C.C. (3), le circuit d'excitation (1) comprenant pour chaque lampe (2a ; 2b) :
- un premier fil conducteur (4a ; 4b) connectant la lampe (2a ; 2b) au pôle positif (P+),
- un deuxième fil conducteur (5a ; 5b) connectant la lampe (2a ; 2b) au pôle négatif (P-),
- un fil conducteur central (6a ; 6b) connecté au point central (C) et ramifié à un point de branchement (Ya ; Yb) à connecter au premier fil conducteur (4a ; 4b) à un premier point de connexion (X1a ; X1b) et au deuxième fil conducteur (5a ; 5b) à un deuxième point de connexion (X2a ; X2b),
- une première unité de commutation (L1A ; L2A) qui, dans un premier état de commutation connecte le pôle positif (P+) au premier point de connexion (X1a ; X1b) et interrompt la connexion entre le fil conducteur central (6a ; 6b) et le premier point de connexion (X1a; X1b), et dans un deuxième état de commutation réciproquement.
- une deuxième unité de commutation (L1B ; L2B) qui dans un premier état de commutation connecte le pôle négatif (P-) au deuxième point de connexion (X2a ; X2b) et interrompt la connexion entre le fil central (6a ; 6b) et le deuxième point de connexion (X2a ; X2b), et dans un deuxième état de commutation réciproquement, et
- une unité de commande de supervision (7) pour détecter un défaut de terre ou un court-circuit inter-fils conducteurs, sur la base des états de commutation des unités de commutation (L1A, L2B ; L1 B, L2B) et de mesures de courant aux premier, deuxième fils conducteurs et au fil conducteur central (4a, 5a, 6a ; 4b, 5b, 6b).

2. Circuit d'excitation selon la revendication 1, **caractérisé en ce que** les unités de commutation (L1A, L2A ; L1B, L2B) comprennent chacune deux commutateurs (L1A1, L1A2 ; L2A1, L2A2 ; L1B1, L1B2 ; L2B1, L2B2) qui sont activés et désactivés de façon complémentaire.

3. Circuit d'excitation selon la revendication 1 ou 2, **caractérisé en ce que** les unités de commutation (L1A, L2A; L1B, L2B) sont commandées par l'unité de supervision (7) qui est connectée à un premier point de mesure de courant (M1) disposé dans le premier fil conducteur (4a ; 4b) entre le pôle positif (P+) et le premier point de connexion (X1a ; X1b), un deuxième point de mesure de courant (M2) disposé dans le deuxième fil conducteur (5a ; 5b) entre le pôle négatif (P-) et le deuxième point de connexion (X2a ; X2b), et un troisième point de mesure de courant (M3) disposé dans le fil conducteur central (6a ; 6b) entre le point central (C) et le point de branchement (Ya ; Yb), dans lequel l'unité de supervision (7) détecte les courts-circuits sur la base des états de commutation des unités de commutation (L1A, L2A ; L1B, L2B) et la mesure de courant.

4. Circuit d'excitation selon l'une quelconque des revendications précédentes, **caractérisé en ce que** chacun des pôles (P+, P-) est connecté par une résistance (R+, R-) à une résistance de point central (R) qui est connectée à la terre.
